# EUROPÄISCHE PATENTSCHRIFT

(11) **EP 1 238 843 B1**
(45) Veröffentlichungstag und Bekanntmachung des Hinweises auf die Patenterteilung: **17.01.2007**
(21) Anmeldenummer: 02003843.6
(22) Anmeldetag: 20.02.2002
(51) Int. Cl.: B60J 11/00

(54) **Schutzumhüllung für ein Kraftfahrzeug**
Protective covering for vehicle
Enveloppe de protection pour un véhicule automobile

(30) Priorität: 07.03.2001 DE 20103999 U
(43) Veröffentlichungstag der Anmeldung: 11.09.2002
(73) Patentinhaber: Hermann Chr. Knüppel KG, 34346 Hann. Münden (DE)
(72) Erfinder: Rabasse, Kenneth, 34414 Warburg (DE); Pilz, Hendrik, 37073 Göttingen (DE)
(74) Vertreter: Hertz, Oliver

(56) Entgegenhaltungen:
- EP-A- 1 061 008
- DE-A- 10 019 903
- DE-C- 861 512
- DE-U- 20 019 444
- GB-A- 2 326 140

## Beschreibung

Die Erfindung betrifft eine Schutzumhüllung für Kraftfahrzeuge gemäß dem Obergegriff vom Anspruch 1, zum Transport- und Lagerschutz, z. B. vor deren Auslieferung an den Kunden. Eine Schutzumhüllung der genannten Art ist in EP 106 1008 A offenbart.

Es ist allgemein bekannt, Bauteile, z. B. für technische Anlagen, nach ihrer Herstellung bis zum bestimmungsgemäßen Einbau in der jeweiligen Anlage durch eine Verpackung gegen nachteilige mechanische oder chemische Umwelteinflüsse zu schützen. Derartige Verpackungen bestehen aus einem starren Verpackungsmaterial, z. B. in Kastenform, oder auch aus einem flexiblen Verpackungsmaterial auf der Basis von Papier oder Folie. Der Nachteil herkömmlicher Kastenverpackungen besteht in deren hohem Material- und Platzbedarf. Die verfügbaren flexiblen Verpackungen besitzen je nach Bauform verschiedene Nachteile. Einfache Umhüllungen, in die das Bauteil jeweils eingeschlagen wird, erfordern den Einsatz zusätzlicher loser Befestigungselemente, z. B. in Form von Schnüren oder Klebestreifen. Dadurch wird der Verpackungsvorgang aufwendig. Außerdem ergibt sich in der Regel eine verminderte Zuverlässigkeit bei der Erfüllung der Schutzfunktion. Ein generelles Problem bei Schutzumhüllungen aus glatten Folienbahnen ist die gewünschte Anpassung an die Raumform des zu verpackenden Bauteils, die ggf. völlig unregelmäßig ist.

Die genannten Probleme treten besonders bei großformatigen Bauteilen, wie z. B. Kraftfahrzeugen, auf. Es ist bekannt, beim Transport von Kraftfahrzeugen zum Karosserieschutz Wachsschichten aufzubringen. Diese besitzen zwar den Vorteil, dass die Manövrierfähigkeit des Kraftfahrzeugs auch bei der Auslieferung von Hersteller zum Händler voll erhalten bleibt. Dafür ist jedoch die Beseitigung des Schutzes (Abwaschen der Wachsschicht) sehr zeit- und lösungsmittelaufwendig. Es ist ferner bekannt, Schutzumhüllungen für Kraftfahrzeuge durch thermisch aufgeschrumpfte Folien zu bilden. Diese sind wegen des arbeits- und energieaufwendigen Verpackungsvorgang nachteilig. Außerdem muss zur Bewegung des Kraftfahrzeugs während der Auslieferung aus eigener Kraft die Schutzumhüllung zumindest teilweise zerstört werden (Öffnen einer Tür). Dies bedeutet eine irreversible Einschränkung der Funktionsfähigkeit der Schrumpffolie. Zum Schutz von Kraftfahrzeugen sind auch Faltgaragen bekannt, die sich jedoch nicht als Transportschutz für Fahrzeuge bei der Auslieferung eignen.

Aus US-A-5 927 793 ist eine Schutzabdeckung für Kraftfahrzeuge, Flugzeugteile oder Bootsteile bekannt, die eine Plane zur Abdeckung des jeweiligen Körpers und am Rand der Plane einen umlaufenden, elastischen Rahmen umfasst, der der Fixierung der Plane bspw. an einem Kraftfahrzeug dient. Diese Schutzumhüllung besitzt mehrere Nachteile. Erstens ist die Plane an die Form des abzudeckenden Körpers angepasst. Dies bedeutet einen hohen Materialaufwand und Probleme beim Freilufttransport. Die Plane bildet einen hohen Luftwiderstand. Außerdem besitzt die Schutzumhüllung mit dem umlaufenden Rahmen einen komplizierten Aufbau. Um den Rahmen zuverlässig fixieren zu können, enthält er ein kompliziertes Gestänge, das einen großen Montageaufwand erfordert.

Aus DE-OS 197 24 345 ist eine Schutzhaube für Fahrzeuge bekannt. Die Schutzhaube besteht aus einer stabilen, selbsttragenden Kapsel, die die Fahrzeugoberfläche passgenau abdeckt.
Die Schutzhaube besitzt den Nachteil einer starren Form und eines großen Aufwandes zu deren Herstellung. Als Transportverpackung müsste sie am Zielort vernichtet oder mit großem Aufwand zurückgeschickt werden.

Weitere Schutzumhüllungen für Kraftfahrzeuge sind aus US-A-5 845 958, DE 100 19 903 und EP 1 061 008 bekannt. Diese Schutzumhüllungen sind jeweils als flexible Folienabdeckungen gebildet, die über dem Kraftfahrzeug ausgebreitet und an dessen Unterseite befestigt werden. Zur Benutzung des Kraftfahrzeuges im verpackten Zustand ist die Schutzumhüllung im Bereich der Fahrertür so gestaltet, dass ein zeitweiliges Öffnen möglich ist, ohne dass die gesamte Umhüllung abgenommen werden muss. Im Bereich der Fahrertür bildet die Umhüllung eine ausgedehnte Lasche, die nach vorn (US-A-5 845 958) oder nach oben (DE 100 19 903, EP 1 061 008) aufgeklappt werden kann. Diese Schutzumhüllungen besitzen zwar den Vorteil einer vereinfachten Handhabbarkeit. Allerdings sind die Umhüllungen gemäß US-A-5 845 958 und DE-OS 197 24 345 in Bezug auf die eingeschränkte Formanpassung gegenüber der Fahrzeugkarosserie nachteilig. Des Weiteren stellt die Lasche an der Fahrzeugtür ein Problem dar. Die Lasche hängt im geöffneten Zustand unkontrolliert an der übrigen Umhüllung. Es besteht eine Abrissgefahr.

Weitere Nachteile der Klapplasche im Türbereich zeigen sich im praktischen Einsatz der herkömmlichen Umhüllungen. Die Schutzfunktion der herkömmlichen Umhüllungen ist nur gegeben, wenn das Türsegment vollständig geschlossen ist. Wenn das Fahrzeug bewegt wird, ist die Hülle geöffnet und damit für die Dauer des Transportes der Schutz nur eingeschränkt gegeben. Sowohl die Fahrzeugtür als auch die Klapplasche sind direkt z. B. der Witterung ausgesetzt, sie können verschmutzen und es können Schäden auftreten. Falls bspw. im geöffneten Zustand Regen auf die Klapplasche fällt, so wird beim Verschließen Wasser unter der Schutzumhüllung angesammelt. Außerdem verlangen die herkömmlich gebildeten Klapplaschen eine hohe Disziplin des Fahrers. Die Tür muss auch nach Gebrauch ordnungsgemäß geschlossen werden. Dieser Verschluss ist zeitaufwendig und bspw. bei Durchführung auf dem Oberdeck eines Autotransporters mit Gefahren verbunden.

Die Aufgabe der Erfindung ist es, eine verbesserte Schutzumhüllung insbesondere für Kraftfahrzeuge anzugeben, die einfach anwendbar ist und sich durch eine hohe Zuverlässigkeit auszeichnet. Die Schutzumhüllung soll ferner ohne Einschränkung der Schutzfunktion die Bedienbarkeit des Kraftfahrzeuges im verpackten Zustand ermöglichen. Es besteht insbesondere ein Interesse daran, dass die verbesserte Schutzumhüllung ein einfaches und zuverlässiges Verschließen der Fahrertür ohne Einschränkung der Schutzfunktion der Umhüllung ermöglicht.

Diese Aufgabe wird durch eine Schutzumhüllung mit den Merkmalen gemäß Anspruch 1 gelöst. Vorteilhafte Ausführungsformen der erfindungsgemäßen Schutzumhüllung ergeben sich aus den abhängigen Ansprüchen.

Die Erfindung basiert auf der Idee, eine aus einer Vielzahl von flexiblen Foliensegmenten bestehende Schutzumhüllung für ein Kraftfahrzeug bereitzustellen, deren räumliche Form der Form der Karosserieoberfläche des Kraftfahrzeugs entspricht und die mit mindestens einer Türumhüllung für entsprechend mindestens eine Fahrzeugtür oder -klappe versehen ist. Die Türumhüllung wird durch ein eigenständiges Foliensegment gebildet, das im ' Scharnierbereich der Anbringung der Fahrzeugtür an der Karosserie mit der Schutzumhüllung verbunden ist und eine äußere Gestalt besitzt, die ein Umschlagen des Foliensegmentes an den Türrändern und ein Verspannen der Umschläge auf der Türinnenseite ermöglicht. Die übrige Schutzumhüllung des Fahrzeuges besitzt im Bereich der jeweiligen Tür eine entsprechende Ausnehmung, deren innere Randform von dem äußeren Rand des Foliensegmentes der Türumhüllung abweicht (Umschlagbildung). Die übrigen Foliensegmente der Schutzumhüllung sind so zusammengesetzt, dass die Schutzumhüllung im entspannten Zustand fest anliegend oder mit einem geringen Spielraum auf der Karosserie aufsitzt. Die Schutzumhüllung mit Karosseriepassung, die aus den Foliensegmenten zu einer einstückigen Hülle zusammengesetzt ist, kann problemlos ohne Überdehnungen oder Zerstörungen der Hülle auf die Karosserie aufgezogen und wieder abgenommen werden.

Die Bereitstellung einer eigenständigen Türumhüllung besitzt die folgenden Vorteile. Die Tür des Kraftfahrzeuges ist trotz der Verpackung vollständig bedienbar. Die Umhüllung der Tür muss zum Ein- und Aussteigen weder ganz noch teilweise geöffnet oder entfernt werden. Vorteilhafterweise bleibt die Funktion der Fahrzeugtür mit Wasser- und Winddichtheit vollständig erhalten. Trotz der Umschlagbildung ist es möglich, die Fahrzeugtür sicher zu verriegeln. Es besteht keine Möglichkeit, dass Wasser unter die Umhüllung dringt und ggf. von inneren Foliebeschichtungen aufgenommen wird.

Gemäß bevorzugter Ausführungsformen der Erfindung ist die Schutzumhüllung mit einer Türumhüllung ausgestattet, die so zugeschnitten ist, dass ein oberer Umschlagrand die Tür mit einem nur schmalen Streifen umgreift, während die anderen Umschlagränder breiter gebildet sind, und/oder dass am oberen Rand der Türumhüllung eine Schließeinrichtung zur Verwendung der Türumhüllung mit der übrigen Schutzumhüllung vorgesehen ist. Diese Maßnahmen bieten weitere Vorteile bei der Abdichtung und Anbringung der Fahrzeugtür.

Die Schutzumhüllung für den Karosseriebereich bildet eine an die Form des zu umhüllenden Kraftfahrzeugs angepaßten Tasche, die dazu ausgebildet ist, das Kraftfahrzeug zumindest teilweise aufzunehmen, und einen Umschlag aufweist, der zur Abdeckung des übrigen Kraftfahrzeugs ausgebildet ist. Die Tasche umfasst Abdecksegmente, die zu einer Form entsprechend dem Frontbereich : des Kraftfahrzeuges zusammengesetzt sind. Der Umschlag umfasst Abdecksegmente für alle restlichen Karosserieteile.

Die Foliensegmente sind an ihren Rändern entlang vorbestimmter Kantenlängen miteinander verbunden, wobei die verbundenen Ränder verschieden geformte Begrenzungen des jeweiligen Foliensegments bilden. Zur Ausbildung einer bestimmten Raumform der Schutzumhüllung sind die Segmente entlang gleicher oder einander überlappender Schnittkantenlängen miteinander verbunden. Die aneinandergrenzenden Ränder mit den gleichen Schnittkantenlängen besitzen jedoch nicht dieselbe Form, so dass in verbundenem (z. B. zusammengenähtem, geschweißtem oder verklebtem) Zustand kein glatter Faltungsbereich, sondern formabhängig ein gewölbter Bereich entsteht, der an die Gestalt des zu verpackenden Karosserieteils angepasst ist. Damit wird es möglich, mit einem an sich flachen, bahnförmigen Folienmaterial eine gewölbte Umhüllung für einen dreidimensionalen Körper auszubilden. Bei Betrachtung einer ebenen Aufspannung der Foliensegmente wird bspw. ein in der jeweiligen Folienebene gerader Rand mit einem gekrümmten Rand verbunden. Je nach konkaver oder konvexer Krümmung (hin zum bzw. weg vom zugehörigen geraden Rand) ergibt sich somit im verbundenen Zustand der Segmente eine Außen- oder Innenwölbung. Diese Krümmung wird anwendungsabhängig je nach dem zu bedeckenden Karosserieteil gewählt.

Gemäß einem weiteren Gesichtspunkt der Erfindung enthält die Schutzumhüllung mindestens ein Sichtsegment im Bereich einer Fahrzeugscheibe. Mit dem Sichtsegment wird die Manövrierfähigkeit des Fahrzeugs im verpackten Zustand verbessert.

Die Erfindung liefert die folgenden weiteren Vorteile. Die Schutzumhüllung verbindet die Vorteile einer einfachen Herstellung und Anpassung an konkrete Verpackungsaufgaben mit einer hohen Zuverlässigkeit und Beständigkeit der Umhüllung unter realen Betriebsumständen. Die Schutzumhüllung erlaubt eine einfache Anpassung an die Raumform des zu umhüllenden Bauteils. Sie ist gut für Abdeckung typspezifischer, unregelmäßiger, in beliebigen Raumrichtungen vorgesehener Karosserieformen geeignet. Die Schutzumhüllung ist besonders auf den Schutz der empfindlichen Bauteiloberflächen gerichtet und erlaubt es, dass weniger empfindliche Komponenten nur teilweise abgedeckt sind oder sogar aus der Schutzumhüllung herausragen (z. B. die Räder).

Die erfindungsgemäße Schutzumhüllung kann mit einer einzelnen Person oder auch automatisiert in einem einfachen Arbeitsschritt auf das Fahrzeug aufgezogen werden. Die Abnahme erfolgt zerstörungsfrei. Die Schutzumhüllung ist mehrfach verwendbar. Versuche im Strömungskanal haben gezeigt, dass die Schutzumhüllung auch in starken Luftströmungen (z. B. Fahrtwind beim Bahntransport) stabil auf der Karosserie aufsitzt, ohne sich aufzublähen oder abgerissen zu werden. Die Befestigung der Schutzumhüllung erfolgt mit einfachen Verschluss- und Befestigungselementen, die lediglich den Sitz der Schutzumhüllung auf der Karosserie sicherstellen, ohne größere Kräfte aufnehmen zu müssen. Zusätzliche Transportsicherungen sind nicht erforderlich.

Die Schutzumhüllung kann vollständig aus wiederverwertbarem Material hergestellt werden. Wenn die Schutzumhüllung nach Mehrfachnutzung aus dem Verkehr gezogen wird, kann sie vollständig recycelt werden und insbesondere zur Herstellung einer neuwertigen Schutzumhüllung verwendet werden.

Weitere Vorteile und Einzelheiten der Erfindung werden im folgenden unter Bezug auf die beigefügten Zeichnungen beschrieben.

### Es zeigen:

- Figur 1: eine Perspektivansicht eines mit einer erfindungsgemäßen Schutzumhüllung verpackten Fahrzeugs,
- Figur 2: eine Perspektivansicht einer Schutzumhüllung mit geöffneten Klappsegmenten,
- Figur 3: eine Übersichtsdarstellung von Foliensegmenten zur Bedeckung einer Karosserieseite,
- Figur 4: eine Übersichtsdarstellung von Foliensegmenten zur Bedeckung des vorderen Fahrzeugteils,
- Figur 5: eine Übersichtsdarstellung von Foliensegmenten zur Bedeckung des hinteren Fahrzeugteils,
- Figur 6: eine Illustration von Klapp- und Sichtsegmenten einer erfindungsgemäßen Schutzumhüllung,
- Figur 7: eine Übersichtsdarstellung von Foliensegmenten zur Bedeckung der oberen Karosserieteile,
- Figur 8: eine Illustration eines Sichtsegments,
- Figur 9: Illustrationen von Foliensegmenten zur Abdeckung von Außenspiegeln,
- Figur 10: eine Schnittdarstellung eines Folienmaterials zur Herstellung der Foliensegmente, und
- Figur 11: eine schematische Perspektivansicht der Innenseite einer mit einer erfindungsgemäßen Türumhüllung versehenen Fahrzeugtür.

Im folgenden wird die Erfindung am Beispiel einer als Transporthaube für ein Kraftfahrzeug ausgebildeten Schutzumhüllung erläutert, die die Türumhüllung an der Fahrertür aufweist. Die Erfindung ist jedoch nicht auf diese Ausführungsform beschränkt, sondern in analoger Weise für eine oder mehrere andere Fahrzeugtüren oder -klappen, wie z. B. die Beifahrertür, eine Heckklappe oder auch die Motorhaube, realisierbar.

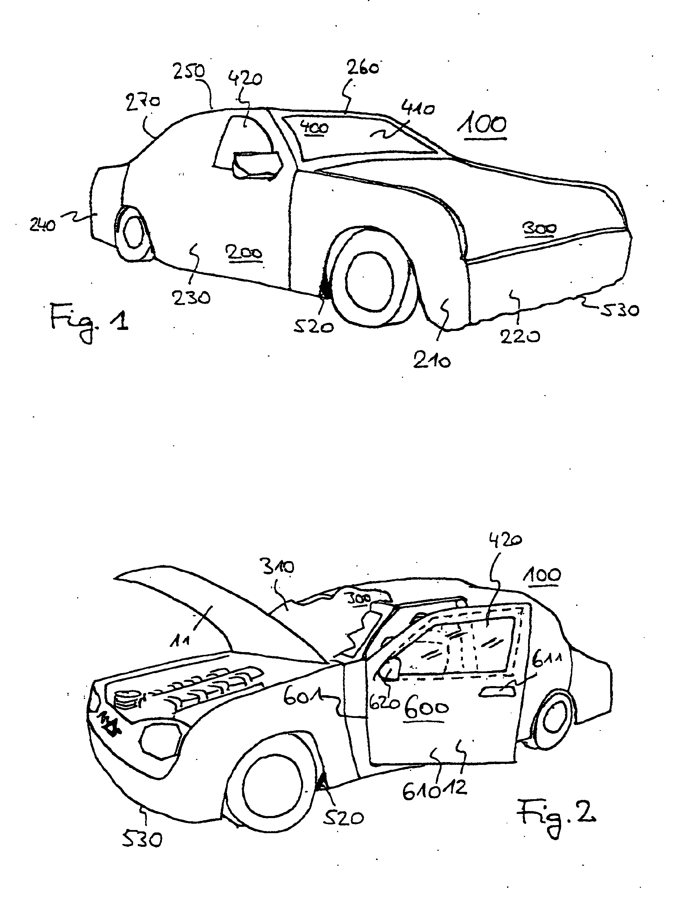

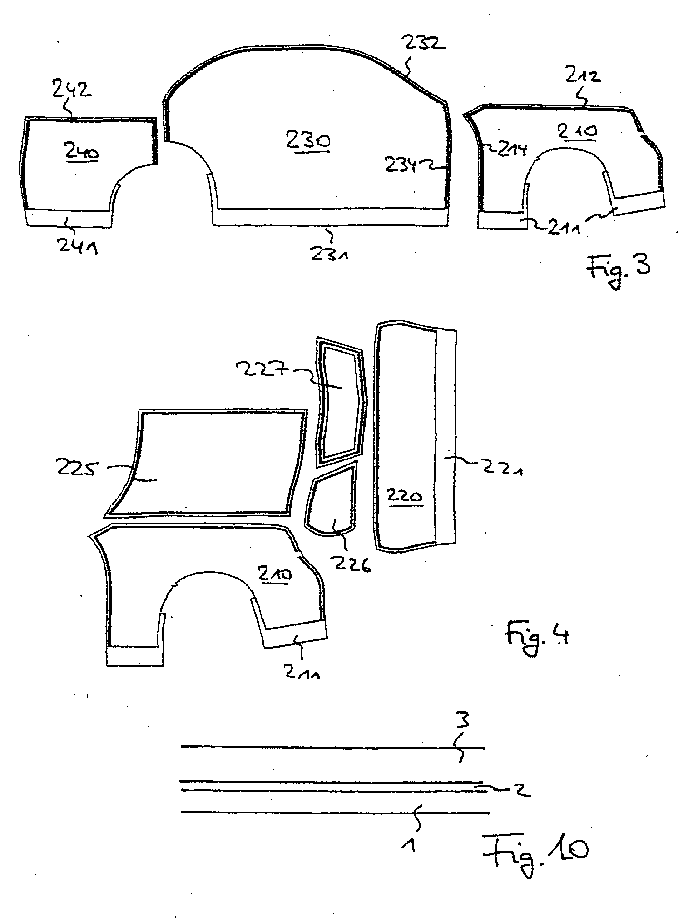

Die Figuren 1 und 2 illustrieren ein mit der erfindungsgemäßen Schutzumhüllung 100 verpacktes Kraftfahrzeug in schematischer Perspektivansicht, wobei aus Übersichtlichkeitsgründen die einzelnen Foliensegmente (insgesamt rd. 30) und deren gegenseitige Verbindung entlang von Segmenträndern mit verschiedenen Formen nicht gezeigt sind. Das Prinzip der Segmentverbindung zur Erzielung bestimmter Raumformen der Umhüllung wird unten erläutert. Die Schutzumhüllung 100 umfasst Abdecksegmente 200 zur Abdeckung bestimmter Karosserieteile oder der Spiegel, ggf. Klappsegmente 300, die ein zeitweiliges Öffnen der Schutzumhüllung im verpackten Zustand des Kraftfahrzeugs ermöglichen, und Sichtsegmente 400, die der Schaffung von Sichtfenstern in der Schutzumhüllung dienen. Die Klapp- und Sichtsegmente sind fakultative Merkmale einer erfindungsgemäßen Schutzumhüllung. Die o. g. Aufgabe wird auch durch eine ausschließlich aus fest miteinander verbundenen Foliensegmenten gebildete Schutzumhüllung mit einer Türumhüllung 600 gelöst.

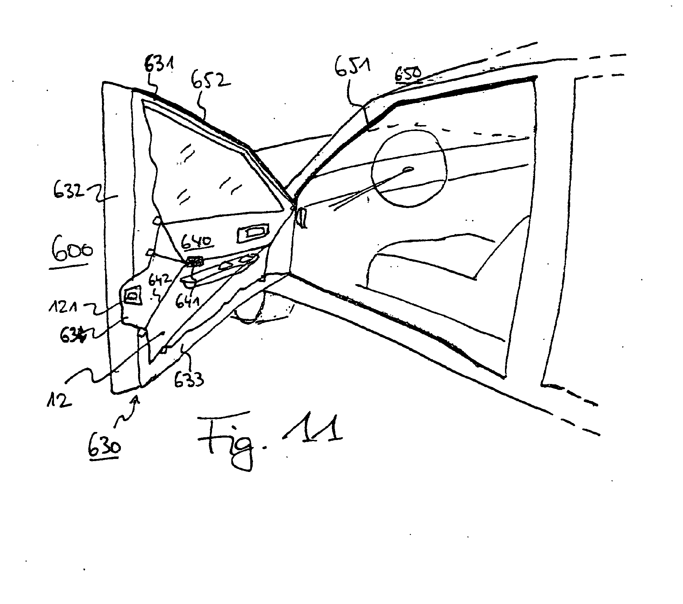

Die Türumhüllung 600 besteht im wesentlichen aus dem Foliensegment 610, das entlang der Verbindungslinie 601 mit der übrigen Schutzumhüllung 100 verbunden und um die Kanten der Tür 12 umgeschlagen ist (siehe Figur 11). Das Foliensegment 610 kann selbst aus mehreren Teilsegmenten gebildet sein, wie dies für die übrige Umhüllung beschrieben ist. Das Bezugszeichen 620 verweist auf das Spiegelsegment (siehe auch Figur 9). Im Bereich des Türgriffs besitzt das Foliensegment eine Erweiterung 611, die ein Bedienen des Griffes erleichtert.

Von den Abdecksegmenten 200, deren Einzelheiten unten erläutert werden, sind die vorderen Kotflügelsegmente 210 und das Frontsegment 220 hervorzuheben. Diese Segmente bilden eine Tasche, in die beim Auflegen der Schutzumhüllung zunächst die vorderen Karosserieteile eingeführt werden. Die übrigen Abdecksegmente, insbesondere die Seitensegmente 230 und die hinteren Kotflügelsegmente 240 bilden mit dem Dachsegment 250 und den Frontscheiben- und Rückscheibensegmenten 260, 270 einen Umschlag. Dieser Umschlag wird nach Anbringung der Segmente 210 und 220 über die restliche Karosserie umgeschlagen oder gezogen, um die Umhüllung zu vervollständigen.

Die Klappsegmente 300 sind Foliensegmente, deren Verbindung mit benachbarten Foliensegementen entlang mindestens einer Schnittlinie trennbar und auch verschließbar ist. Sie können insbesondere als Motorhaubensegment 310 vorgesehen sein, falls die Motorhaube nicht wie die Fahrertür mit einer eigenen Umhüllung ausgestattet ist. Figur 2 illustriert das Motorhaubensegment, das jeweils entlang einer Schnittlinie mit der übrigen Schutzumhüllung fest verbunden ist. Das Segment 310 kann nach Öffnen der jeweiligen Verschluss- und Befestigungselemente zur Verbindung mit benachbarten Foliensegmenten nach oben weggeschlagen werden, so dass sich die Motorhaube 11 öffnen lässt. Die Verschluss- und Befestigungselemente umfassen bspw. Reißverschlüsse, Gleit- oder Schiebeverschlüsse, Klettverschlüsse, Druckknopfleisten oder ähnlich reversibel lösbare Verbindungen. Anwendungsabhängig können weitere Klappsegmente, bspw. am Kofferraum oder am Tankstutzen, vorgesehen sein.

Als Sichtelemente 400 kann das Frontsichtsegment 410 und das Seitensichtsegment 420 vorgesehen sein. Zumindest die Sichtelemente 400 der erfindungsgemäßen Schutzumhüllung bestehen aus einem durchsichtigen Material, z. B. aus PVC, Zellglas oder einem gelochten Folienmaterial (Gittergewebe oder Lochstanzfolie). Weitere Sichtsegmente könnten bspw. am Rückfenstersegment 270 oder an der Position der Scheinwerfer vorgesehen sein. Als Sichtelemente 400 oder Sichtbereiche können alternativ auch eingefasste Ausnehmungen oder Lücken in der Umhüllung vorgesehen sein, die im wesentlichen die Form der jeweiligen Scheibe, die frei bleiben soll, besitzen und an ihren Rändern auf der Scheibe mit Klebestreifen festgeklebt sind.

An der erfindungsgemäßen Schutzumhüllung 100 sind auch Verschluss- und Befestigungselemente vorgesehen, die neben den Verbindungen für die Klappsegmenten 300 auch Befestigungslaschen 520 und Gummizüge 530 umfassen.

Figur 3 illustriert Einzelheiten der vorderen und hinteren Kotflügelsegmente 210, 240 und des Seitensegments 230 der Karosserieumhüllung in auseinandergezogener Darstellung. Die äußere Gestalt der Segmente folgt im Wesentlichen der Form der abzudeckenden Seitenflächen der Fahrzeugkarosserie. An den Unterkanten der Segmente, die die untere Begrenzung der Schutzumhüllung bilden, sind Verstärkungssegmente 211, 231 und 241 vorgesehen. In der vollständig zusammengesetzten, einsatzbereiten Schutzumhüllung sind die Verstärkungssegmente nach innen umgeschlagen und mit den jeweils angrenzenden Segmenten vernäht oder verschweißt. An den in Druck hervorgehobenen Rändern 212, 232 bzw. 242 der Segmente sind besonders verstärkte Verbindungen (z. B. Doppelnähte) mit den jeweils benachbarten Foliensegmenten vorgesehen.

In Figur 3 ist am Beispiel der einander gegenüberliegenden Schnittkanten der Segmente 210, 230 die Verbindung der Foliensegmente erkennbar. Die Schnittkante 214 des vorderen Kotflügelsegments 210 besitzt eine andere Form als die im zusammengesetzten Zustand angrenzende Schnittkante 234 des Seitensegments 230. Die Schnittkante 214 ist stärker gekrümmt als die Schnittkante 234. Dies bedeutet, dass im zusammengesetzten Zustand die Segmente 210, 230, obwohl sie jeweils aus ebenen Folienmaterialen ausgeschnitten sind, eine Raumform aufspannen, die an die äußere Karosserieform im Bereich des Übergangs von einer Seitentür zum vorderen Kotflügel angepasst ist. Dieses Prinzip der Verbindung gleicher Kanten- oder Schnittlängen mit verschiedenen Formen zur Erzielung einer bestimmten Raumform der Umhüllung wird je nach Bedarf auch an anderen Schnittkanten verwendet.

Zur Befestigung der Umhüllung im Bereich der Türschweller an der Unterseite des Fahrzeugs können elastische Laschen mit Haken vorgesehen sein, die an Strukturelementen auf der Unterseite anzubringen sind. Derartige Strukturelemente sind beispielsweise durch Schweißkanten zwischen der Bodengruppe und dem seitlichen Karosserieaufbau gegeben. Diese Befestigung erlaubt es, an der Unterseite durchgehende Bänder, wie sie bei herkömmlichen Hüllen vorgesehen sind, zu vermeiden.

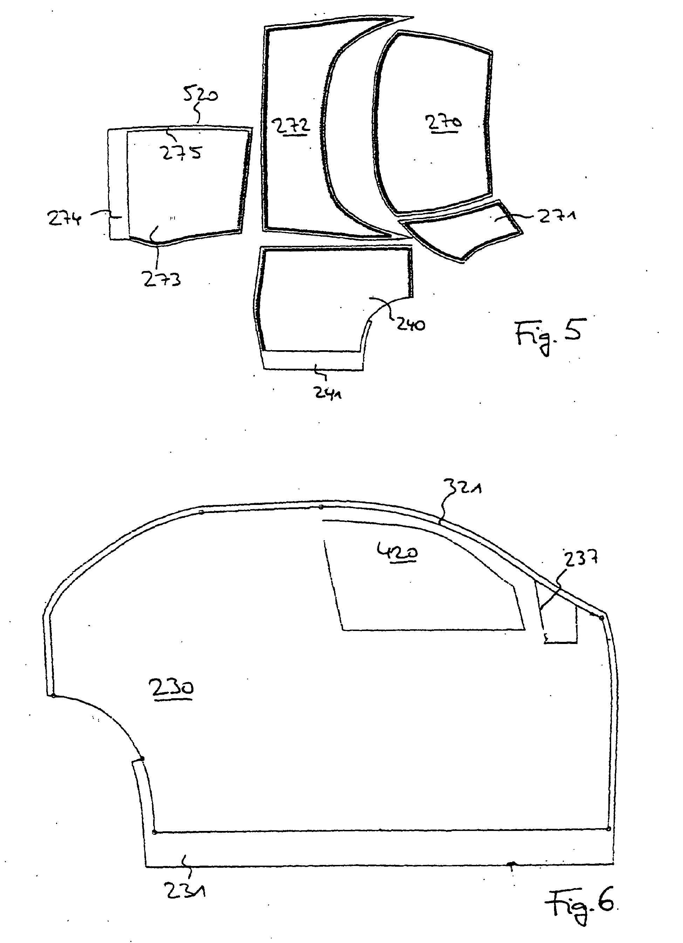

Figur 4 illustriert beispielhaft die Foliensegmente zur Abdeckung des vorderen Teils des Fahrzeugs gemäß einer an relativ breite Fahrzeuge angepassten Ausführungsform der Erfindung. Zu diesen zählt neben dem vorderen Kotflügelsegment 210 (siehe auch Figur 3) und dem Frontsegment 220 (siehe auch Figur 1) ein erstes Motorhaubensegment 225, ein Scheinwerfersegment 226 und ein Grillsegment 227. Zur Vervollständigung der Abdeckung des vorderen Teils sind ein weiteres Motorhaubensegment, ein weiteres Scheinwerfersegment und entsprechend das gegenüberliegende Kotflügelsegment (jeweils nicht dargestellt) vorgesehen. Diese Segmente sind in Bezug auf die Fahrzeuglängsachse spiegelbildlich zu den entsprechenden Segmenten 210, 225 und 226 gebildet. Figur 4 illustriert wiederum die Verstärkungssegmente 211 bzw. 221. Im umgeklappten Verstärkungssegment 221 ist ein Gummizug zur Befestigung des Segments an der Karosserieunterseite vorgesehen. Gemäß bevorzugter Ausführungsformen der Erfindung befindet sich der Gummizug auch in den übrigen Verstärkungssegmenten, die bspw. in den Figuren 3 und 6 illustriert sind.

In Figur 4 sind die Foliensegmente relativ so zueinander angeordnet, wie sie in der Schutzumhüllung zusammengesetzt werden. Wiederum ist das Prinzip der verschieden gekrümmten Schnittkanten zur Erzielung vorbestimmter Raumformen erkennbar. Bspw. liefert die winklige Krümmung des Grillsegments 227 relativ zur benachbarten graden Schnittkante des Frontsegments 220 eine an die Karosserieform angepasste Krümmung der Schutzumhüllung. Das Grillsegment kann mit Luftlöchern oder -schlitzen versehen sein oder aus Gaze bestehen.

Figur 5 illustriert entsprechend die Form und relative Anordnung der Foliensegmente am hinteren Teil des Kraftfahrzeugs. Die Segmente umfassen im Einzelnen das hintere Kotflügelsegment 240 mit dem Verstärkungssegment 241 (siehe auch Figur 3), das Rückfenstersegment 270, ein erstes Holmsegment 271, ein Heckklappensegment 272 und ein erstes Stoßstangensegment 273. Ein zweites Holmsegment und ein zweites Stoßstangensegment sind spiegelsymmetrisch auf der gegenüberliegenden Seite der Umhüllung zur Abdeckung der entgegengesetzten Karosserieseite vorgesehen. Das Stoßstangensegment 273 besitzt ebenfalls ein Verstärkungssegment 274 zur Führung eines Gummizugs.

Das Stoßstangensegment 273 ist entlang seiner Schnittkante 275 mit den benachbarten Stoßstangensegment (nicht dargestellt) verbunden. Gemäß einer bevorzugten Ausführungsform der Erfindung ist diese Verbindung reversibel lösbar ausgebildet. Über die Länge der Schnittkante 275 erstreckt sich ein reversibler Verschluss (z. B. Klett- oder Reißverschluss) 520. Dieser Aufbau besitzt den Vorteil, dass bei geöffnetem Verschluss 520 ein Zugriff zum Kofferraum möglich ist. Außerdem kann das Aufziehen der Schutzumhüllung auf das Kraftfahrzeug typabhängig bei geöffnetem Klettverschluss 520 erleichtert werden.

In Figur 6 ist das Seitensegment 230 mit einem Fenstersegment 420 an der rechten Vordertür illustriert. Das Seitensegment 230 besitzt ferner ein umschlagbares Verstärkungssegment 231 zur Aufnahme des Gummizugs. Das Fenstersegment 420 ist in anwendungsabhängig gewählter Form aus einem der o. g. Materialien in das Seitensegment 230 eingesetzt. Das Bezugszeichen 237 verweist auf die Annählinie für Spiegelteile, die im Einzelnen unten unter Bezug auf Figur 9 illustriert sind.

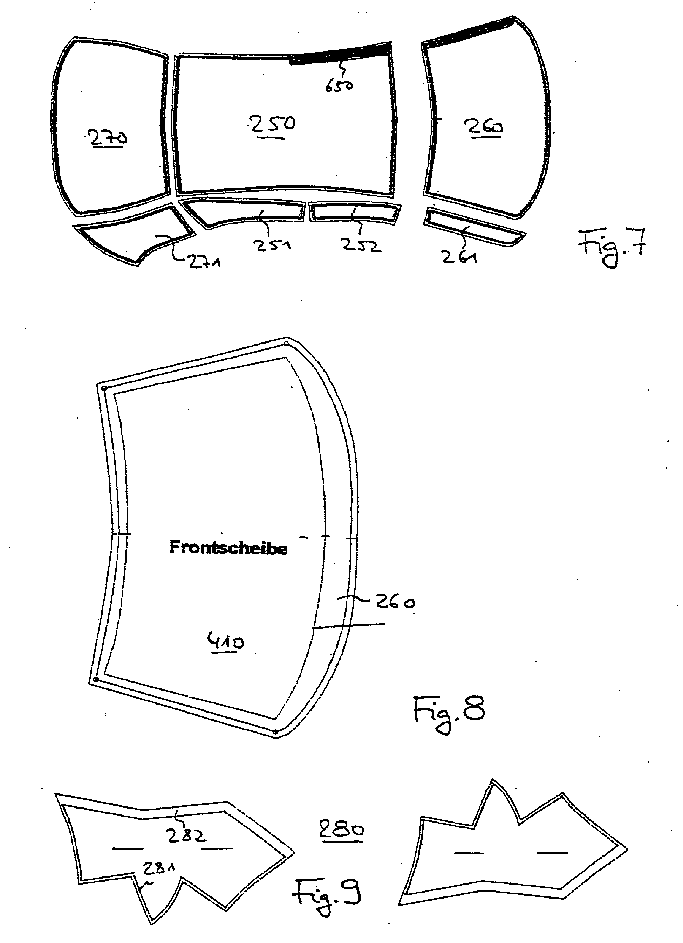

Die Foliensegmente zur Abdeckung des Dachbereiches eines Fahrzeugs sind in Figur 7 gezeigt. Es ist ein Dachsegment 250 vorgesehen, an dessen Vorderseite das Frontscheibensegment 260 und dazu entgegengesetzt das Rückfenstersegment 270 angebracht sind. Es sind ferner das hintere Holmsegment 271 (siehe auch Figur 5) und ein vorderes Holmsegment 261, sowie Verbindungssegmente 251, 252 zur Verbindung zwischen dem Dachsegment 250 und dem jeweiligen Seitensegment (nicht dargestellt) vorgesehen. Figur 7 illustriert wiederum die Bildung gekrümmter Raumformen durch Verbindung von Schnittkanten verschiedener Gestalt. Im Frontscheibensegment 260 oder anstelle des Frontscheibensegments 260 kann ein Sichtsegment 410 (siehe Figur 1) vorgesehen sein.

Auf der Fahrertürseite ist in Figur 7 schematisch mit einem Streifen die Position der Schließeinrichtung 650 illustriert, die zur zusätzlichen Abdichtung der erfindungsgemäßen Türumhüllung (siehe Figur 11) vorgesehen sein kann.

In Figur 8 ist ein optional vorgesehenes Sichtsegment 410 gezeigt, dass in das Frontscheibensegment 260 eingenäht ist. Vorteilhafterweise wird das Sichtsegment 410 aus durchsichtigem Material auf das Frontscheibensegment 260 aufgenäht und die darunterliegende Folie des Frontscheibensegments ausgeschnitten.

Die Außenspiegel, die unregelmäßig aus der Karosserieoberfläche herausragen, erfordern zur Umhüllung besonders geformte Spiegelsegmente 280, die in Figur 9 beispielhaft dargestellt sind. Die Spiegelsegmente 280 werden entlang der Schnittkanten 281 mit sich selbst und entlang der Schnittkanten 282 mit dem Seitensegment 230 (siehe Verbindungslinie 237 in Figur 6) oder der Türumhüllung 600 (siehe Figur 11) kraftschlüssig verbunden. Anwendungsabhängig kann vorgesehen sein, auch in den Spiegelsegmenten Sichtsegmente zu integrieren, damit die Spiegel auch im verpackten Zustand des Fahrzeugs verwendet werden können.

Die oben erläuterte Zusammensetzung aus einer Vielzahl von Foliensegmenten stellt lediglich ein Beispiel dar. Anwendungsabhängig können weitere Segmentierungen zur weiteren Anpassung an die Bauform des zu verpackenden Bauteils oder auch weniger Segmentierungen bei einfach strukturierten Bauteilen vorgesehen sein.

Die einzelnen Segmente sind miteinander vernäht, es kann aber bevorzugt auch eine Verschweißung oder gleichwertige linienhafte oder abschnitts- oder punktweise Verbindung entlang der aneinandergrenzenden Ränder vorgesehen sein. Die Verbindungen können anwendungsabhängig gekappt oder doppelt gekappt ausgeführt sein, um die Schutzumhüllung spritzwasserdicht herzustellen. Besonders bevorzugt wird eine Ultraschallschweißverbindung hergestellt. Diese ist vorteilhafterweise wasserdicht.

Die einzelnen Abdecksegmente der Schutzumhüllung und auch das Foliensegment zur Bildung der erfindungsgemäßen Türumhüllung bestehen aus einer flexiblen Folie. Es wird vorzugsweise ein in Figur 10 illustriertes, mehrschichtiges Folienmaterial nach Art eines Laminats verwendet, das aus einer Trägerfolie 1, einer Haftvermittlerschicht 2 und einer Vliesbeschichtung 3 besteht. Es ist bspw. die Kombination aus einer Polyethylenfolie als Trägerfolie (Dicke ≈ 100 µm) und einem thermisch verfestigten Polypropylen-Vlies (Flächenmasse ≈ 70 g/m²) vorgesehen. Die Polyethylenfolie kann zur Verbesserung der Kältefestigkeit mit einem Anteil von 1 - 5% E/VA und/oder mit Mofizierungsadditiven, z. B. mit einem UV-Schutzmittel, versetzt sein. Die Haftvermittlerschicht 2 besteht aus einem Kunststoff, der bspw. aus gleichen Teilen Polyethylen und Polypropylen besteht. Die Trägerfolie, die Haftvermittlerschicht und das Vlies werden durch eine Extrusionskaschierung oder Thermokalandrierung miteinander verbunden. Dabei wird die Oberfläche der Polyethylenfolie so weit erwärmt, dass diese schmilzt und sich vollflächig mit der Haftvermittlerschicht und über diese mit dem Vlies verbindet.

Das mehrschichtige Folienmaterial wird so zu der Schutzumhüllung vernäht oder verschweißt, dass sich das Vlies auf den Innenseiten des durch die Abdecksegmente gebildeten Hohlraums befindet. Das Vlies besitzt eine Mehrfachfunktion. Erstens dient es der weichen und schonenden Auflage der Folie auf der Oberfläche der abzudeckenden Karosserie und der Abdämpfung äußerer Kräfte. Des weiteren besitzt das Vlies eine Wasseraufnahmefähigkeit, die etwa dem Faktor 6 entspricht. Damit kann auch Umgebungsfeuchtigkeit oder Kondenswasser vom verpackten Fahrzeug aufgenommen werden.

Die in den Figuren gezeigte Schutzumhüllung kann dahingehend modifiziert sein, dass an bestimmten freien Rändern weitere Befestigungselemente, z. B. in Form von Spangen oder Clipsen, angebracht sind, mit denen die Teilsegmente zusätzlich gesichert werden. Es können ferner an der Umhüllung Befestigungselemente in Form von elastischen Bändern (z. B. angenähten Gummibändern), Laschen und/oder Taschen vorgesehen sein, die mit Teilen des verpackten Bauteils zusammenwirken. Anstelle von Reißverschlüssen werden vorzugsweise wasserdichte Gleitverschlüsse eingesetzt.

Figur 11 illustriert weitere Einzelheiten der erfindungsgemäßen Türumhüllung 600. Die Türumhüllung 600 wird durch ein (oder alternativ mehrere) Foliensegment(e) 610 gebildet, das entlang der Schnittlinie 601 (siehe Figur 2) mit dem benachbarten Segment am vorderen Kotflügel vernäht oder verschweißt ist. Das Foliensegment 610 besitzt im Wesentlichen die äußere Form der zu verpackenden Fahrzeugtür 12, ist aber mit einer größeren Dimension zugeschnitten, so dass Umschlagränder 630 auf der Türinnenseite gebildet werden. Die Umschlagränder 630 umfassen im Einzelnen einen oberen Streifen 631, einen seitlichen Streifen 632 und einen unteren Streifen 633. Der obere Streifen 631 ist so bemessen, dass Dichtstreifen des Fahrzeuges im Türrahmen frei bleiben und bei geschlossener Fahrzeugtür mit den entsprechenden Seitenflächen der Fahrzeugtür 12 in direktem Kontakt kommen. Hierzu besitzt der obere Streifen 631 eine Breite, die vorzugsweise so gering ist, dass der Umschlagrand die Tür bei Gebrauch sicher umgreift. Die Breite beträgt bei einer Ausführungsform zum Beispiel weniger als 2 cm, vorzugsweise weniger als 1 cm. Der seitliche Streifen 632 besitzt im Bereich des Türschlosses 121 eine Ausnehmung 634, die die Schlossfunktion gewährleistet. Der seitliche Streifen 632 und der untere Streifen 633 besitzen Breiten, die ebenfalls ein sicheres Umgreifen der Türkanten gewährleisten. Zum Ausgleich des beim Schließen der Tür auftretenden Luftdruckes sind sie breiter als der obere Streifen. Die Breite liegt bei einer Ausführungsform zum Beispiel im Bereich von 5 bis 10 cm.

Auf der Innseite der Fahrzeugtür 12 ist eine Verspannung 640, bestehend aus mehreren Spannelementen 641 und ggf. einer Spanneinrichtung 642 vorgesehen. Die Spannelemente 641 sind bspw. flexible, elastische oder nicht-dehnbare Seile, Drähte, Gurte oder Streifen, die mit der Spanneinrichtung 642 unter Zugspannung gehalten werden. Alternativ kann auf die Spanneinrichtung 642 auch verzichtet werden, falls die Spannelemente 641 aus elastischem Material bestehen. Die Spannelemente 641 sind an den seitlichen und unteren Streifen 632, 633 fest oder lösbar angebracht.

Gemäß einer bevorzugten Ausführungsform der Erfindung ist vom Scharnierbereich her ein einzelnes, nicht-dehnbares Spannelement mit einem Haken vorgesehen, an dem die übrigen Spannelemente von den anderen Türkanten bzw. Umschlagrändern her befestigbar sind.

Gemäß einer weiteren bevorzugten Ausführungsform der Erfindung bilden die Streifen 631 bis 633 an ihren Rändern selbst Umschläge, in denen ein elastisches Element, z. B. ein Gummizug (nicht dargestellt), verläuft.

Das Bezugszeichen 650 verweist auf eine Schließeinrichtung, mit der die Türumhüllung 600 bei von außen geschlossener Fahrzeugtür an ihrer Oberseite mit der übrigen Schutzumhüllung des Fahrzeuges verbunden werden kann. Es ist bspw. ein Reiß- oder Gleitverschluss (mit einem Schieber) mit den zusammengehörigen Elementen 651 an der Schutzumhüllung 100 und 652 an der oberen Seite der Türumhüllung 600 vorgesehen. Das Element 652 verläuft entlang des A-Holms der Fahrertür 12 und deren Oberkante. Die Schließeinrichtung besitzt einen wichtigen Vorteil für die Anbringung der Fahrzeugumhüllung: Mit geschlossener Schließeinrichtung kann die Umhüllung von einer einzelnen Person angebracht werden.

Eine Fahne der Schließeinrichtung 650 ist am oberen Rand der Tür und die gegenüberliegende Fahne an der Resthülle oberhalb der Tür befestigt. Die Schließeinrichtung wird vom Holm (vorn, unten) nach hinten (oben) betätigt. Im Normalfall ist der Schieber verschlossen. Er dient hauptsächlich als Transportsicherung. Die Dichtigkeit der Hülle wird vom Gebrauch der Schließeinrichtung 650 nicht beeinflusst. Das für den Versand zuständige Personal sollte die Schließeinrichtung 650 betätigen, bevor das Fahrzeug per Bahn oder LKW transportiert wird. Während der Standzeiten auf Lagergeländen oder mehrfacher Bewegung des Fahrzeugs zum Zwecke des Versands ist es nicht notwendig die Schließeinrichtung 650 zu schließen.

Die in der vorstehenden Beschreibung, den Zeichnungen und den Ansprüchen offenbarten Merkmale der Erfindung können sowohl einzeln als auch in beliebiger Kombination für die Verwirklichung der Erfindung in ihren verschiedenen Ausgestaltungen von Bedeutung sein.

## Patentansprüche

1. Schutzumhüllung (100) für ein Kraftfahrzeug, die aus einer Vielzahl von Foliensegmenten besteht, die an ihren Rändern entlang vorbestimmter Kantenlängen miteinander verbunden sind, wobei die jeweils verbundenen Ränder verschieden geformte Begrenzungen der zugehörigen Foliensegmente bilden, so dass die Schutzumhüllung entsprechend einer Fläche im Raum gebildet ist, deren Form der Karosserieoberfläche des Kraftfahrzeugs entspricht, **dadurch gekennzeichnet, dass** die Schutzumhüllung mit mindestens einer Türumhüllung (600) für entsprechend mindestens eine Fahrzeugtür oder -klappe versehen ist, wobei die Türumhüllung (600) durch ein eigenständiges Foliensegment (610) gebildet wird, das im Scharnierbereich der Fahrzeugtür oder -klappe (12) mit der Schutzumhüllung (100) verbunden ist und eine äußere Gestalt besitzt, die ein Umschlagen des Foliensegmentes (610) zur Bildung von Umschlagrändern (630) an den Türrändern und ein Verspannen der Umschlagränder auf der Türinnenseite ermöglicht.

2. Schutzumhüllung gemäß Anspruch 1, bei der die Umschlagränder (630) einen oberen Streifen (631), einen seitlichen Streifen (632) und einen unteren Streifen (633) umfassen, die dazu ausgelegt sind, entsprechend obere, seitliche bzw. untere Türkanten der zu umhüllenden Tür (12) zu umgreifen.

3. Schutzumhüllung gemäß Anspruch 2, bei der der obere Streifen (631) so bemessen ist, dass Dichtstreifen des Fahrzeuges im Türrahmen frei bleiben und bei geschlossener Fahrzeugtür mit den entsprechenden Seitenflächen der Fahrzeugtür (12) in direkten Kontakt kommen.

4. Schutzumhüllung gemäß Anspruch 3, bei der der obere Streifen (631) eine Breite besitzt, die so gering wie möglich ist und noch ein sicheres Umgreifen der Türkante gewährleistet.

5. Schutzumhüllung gemäß einem der vorhergehenden Ansprüche 2 bis 4, bei der der seitliche Streifen (632) im Bereich eines Türschlosses (121) der Tür (12) eine Ausnehmung (634) besitzt.

6. Schutzumhüllung gemäß einem der vorhergehenden Ansprüche, bei der eine Schließeinrichtung (650) vorgesehen ist, mit der die obere Seite der Türumhüllung (600) mit der übrigen Schutzumhüllung verbunden werden kann.

7. Schutzumhüllung gemäß Anspruch 6, bei der die Schließeinrichtung (650) durch einen Reiß- oder Gleitverschluss (651, 652) gebildet wird.

8. Schutzumhüllung gemäß einem der vorhergehenden Ansprüche, bei der die Türumhüllung (600) eine Verspannung (640) aufweist, die mehrere Spannelementen (641) und ggf. eine Spanneinrichtung (642) umfasst.

9. Schutzumhüllung gemäß einem der vorhergehenden Ansprüche, bei der die Foliensegmente Sichtelemente (400) aufweisen, die durchsichtig sind.

10. Schutzumhüllung gemäß Anspruch 9, bei der die Sichtelemente (400) ein Frontscheibensegment (410) und/oder ein Seitenfenstersegment (420) und/oder eingefasste Auslassungen in der Umhüllung umfassen.

11. Schutzumhüllung gemäß Anspruch 9 oder 10, bei der die Sichtsegmente aus einem transparenten Kunststoff oder einer mit Löchern versehenen Folie bestehen.

12. Schutzumhüllung gemäß einem der vorhergehenden Ansprüche, bei der Verstärkungssegmente zur Führung von Gummizügen (530) vorgesehen sind, mit denen die Schutzumhüllung an der Karosserie fixiert wird.

13. Schutzumhüllung gemäß einem der vorhergehenden Ansprüche, bei der Befestigungslaschen zur Fixierung der Kotflügel Foliensegmente (210, 240) an den Radkästen eines Kraftfahrzeugs vorgesehen sind.

14. Schutzumhüllung gemäß einem der vorhergehenden Ansprüche, bei der die Foliensegmente aus einem mehrschichtigen Laminatmaterial bestehen, auf dessen Innenseite eine Vliesschicht vorgesehen ist.

## Claims

1. Protective covering (100) for a vehicle which comprises a multiplicity of film segments which are connected to each other at their edges along predetermined edge lengths, the respectively connected edges forming differently shaped delimitations of the associated film segments, so that the protective covering is formed corresponding to a surface in space, the shape of which corresponds to the bodywork surface of the vehicle, **characterised in that** the protective covering is provided with at least one door covering (600) for correspondingly at least one vehicle door or flap, the door covering (600) being formed by an independent film segment (610) which is connected to the protective covering (100) in the hinge region of the vehicle door or flap (12) and having an outer configuration which makes possible turning-up of the film segment (610) in order to form turned-up edges (630) at the door edges and tensioning of the turned-up edges on the door inner side.

2. Protective covering according to claim 1, in which the turned-up edges (630) include an upper strip (631), a lateral strip (632) and a lower strip (633) which are designed for the purposes of engaging around correspondingly upper, lateral or lower door edges of the door (12) to be covered.

3. Protective covering according to claim 2, in which the upper strip (631) is dimensioned such that sealing strips of the vehicle remain free in the door frame and, in the case of a closed vehicle door, come into direct contact with the corresponding side surfaces of the vehicle door (12).

4. Protective covering according to claim 3, in which the upper strip (631) has a width which is as small as possible and still ensures a secure engagement around the door edge.

5. Protective covering according to one of the preceding claims 2 to 4, in which the lateral strip (632) has a recess (634) in the region of a door lock (121) of the door (12).

6. Protective covering according to one of the preceding claims, in which a closure device (650) is provided, with which the upper side of the door covering (600) can be connected to the remaining protective covering.

7. Protective covering according to claim 6, in which the closure device (650) is formed by a zip or slide fastener (651, 652).

8. Protective covering according to one of the preceding claims, in which the door covering (600) has a tensioning element (640) which comprises a plurality of tensioning elements (641) and if necessary a tensioning device (642).

9. Protective covering according to one of the preceding claims, in which the film segments have viewing elements (400) which are transparent.

10. Protective covering according to claim 9, in which the viewing elements (400) include a front windscreen segment (410) and/or a side window segment (420) and/or edged omitted portions in the covering.

11. Protective covering according to claim 9 or 10, in which the viewing segments comprise transparent plastic material or a film provided with holes.

12. Protective covering according to one of the preceding claims, in which reinforcing segments for guiding lengths of rubber (530) are provided, with which the protective covering is fixed to the bodywork.

13. Protective covering according to one of the preceding claims, in which attachment straps for fixing the mudguard film segments (210, 240) on the wheel arches of a vehicle are provided.

14. Protective covering according to one of the preceding claims, in which the film segments comprise a multilayer laminate material, on the inner side of which a nonwoven layer is provided.

## Revendications

1. Enveloppe de protection (100) pour un véhicule automobile qui est constituée d'une pluralité de segments de film qui sont reliés les uns aux autres sur leurs bords le long d'arêtes longitudinales prédéterminées, les bords respectivement reliés formant des délimitations de forme différentes des segments de film correspondants de sorte que l'enveloppe de protection est formée en fonction d'une surface dans l'espace dont la forme correspond à la surface de la carrosserie du véhicule automobile, **caractérisée en ce que** l'enveloppe de protection est munie d'au moins une enveloppe de porte (600) pour au moins une porte ou un hayon du véhicule automobile, l'enveloppe de porte (600) étant formée par un segment de film indépendant (610) qui est relié à l'enveloppe de protection (100) dans la zone de la charnière de la porte ou du hayon du véhicule automobile (12) et qui présente une configuration extérieure qui permet de rabattre le segment de film (610) pour former des bords d'enveloppe (630) au niveau dans bordures de portes et de tendre les bords d'enveloppe sur le côté intérieur de la porte.

2. Enveloppe de protection selon la revendication 1, dans laquelle les bords d'enveloppe (630) comprennent une bande supérieure (631), une bande latérale (632) et une bande inférieure (633) qui sont conçues pour entourer des arêtes de porte supérieure, latérale ou inférieure correspondantes de la porte à envelopper (12).

3. Enveloppe de protection selon la revendication 2, dans laquelle la bande supérieure (631) est dimensionnée de telle manière que des bandes étanches du véhicule restent libres dans le cadre de la porte et viennent en contact direct avec les faces latérales correspondantes de la porte du véhicule (12) lorsque la porte du véhicule est fermée.

4. Enveloppe de protection selon la revendication 3, dans laquelle la bande supérieure (631) présente une largeur qui est la plus faible possible et qui garantit néanmoins un enveloppement sûr de l'arête de porte.

5. Enveloppe de protection selon l'une quelconque des revendications 2 à 4, dans laquelle la bande latérale (632) comporte un évidement (634) dans la zone d'une serrure de porte (121) de la porte (12).

6. Enveloppe de protection selon l'une quelconque des revendications précédentes, dans laquelle il est prévu un dispositif de fermeture (650) avec lequel le côté supérieur de l'enveloppe de porte (600) peut être relié au reste de l'enveloppe de protection.

7. Enveloppe de protection selon la revendication 6, dans laquelle le dispositif de fermeture (650) est formé par une fermeture éclair ou à glissière (651, 652).

8. Enveloppe de protection selon l'une quelconque des revendications précédentes, dans laquelle l'enveloppe de porte (600) comporte un renforcement (640) qui comprend plusieurs éléments de tension (641) et éventuellement un dispositif de tension (642).

9. Enveloppe de protection selon l'une quelconque des revendications précédentes, dans laquelle les segments de film comportent des éléments de visualisation (400) qui sont transparents.

10. Enveloppe de protection selon la revendication 9, dans laquelle les éléments de visualisation (400) comportent un segment de pare-brise (410) et/ou un segment de fenêtre latérale (420) et/ou des découpes enchâssées dans l'enveloppe.

11. Enveloppe de protection selon la revendication 9 ou 10, dans laquelle les éléments de visualisation sont constitués d'une matière plastique transparente ou d'un film muni de trous.

12. Enveloppe de protection selon l'une quelconque des revendications précédentes, dans laquelle il est prévu des segments de renfort pour le guidage de câbles en caoutchouc (530) avec lesquels l'enveloppe de protection est fixée à la carrosserie.

13. Enveloppe de protection selon l'une quelconque des revendications précédentes, dans laquelle il est prévu des colliers de fixation pour la fixation des segments de film d'aile (210, 240) aux couvre-roues d'un véhicule automobile.

14. Enveloppe de protection selon l'une quelconque des revendications précédentes, dans laquelle les segments de film sont constitués d'un matériau stratifié à plusieurs couches sur la face intérieure duquel il est prévu une couche de non-tissé.
